# EUROPEAN PATENT APPLICATION

(11) **EP 4 787 481 A1**
(43) Date of publication of application: **05.08.2026**
(21) Application number: 24890320.5
(22) Date of filing: 18.09.2024
(51) Int. Cl.: H01M 4/505, H01M 4/525, H01M 4/485, H01M 10/0525

(54) **POSITIVE ELECTRODE MATERIAL HAVING STABLE STRUCTURE, LITHIUM-ION BATTERY AND PREPARATION METHOD**

(30) Priority: 14.11.2023 CN 202311514942
(71) Applicant: XTC New Energy Materials (Xiamen) Ltd., Xiamen, Fujian 361000 (CN)
(72) Inventor: XIAO, Lina, Xiamen, Fujian 361000 (CN); LAI, Lanfang, Xiamen, Fujian 361000 (CN); ZENG, Leiying, Xiamen, Fujian 361000 (CN); WEI, Guozhen, Xiamen, Fujian 361000 (CN); ZHANG, Peng, Xiamen, Fujian 361000 (CN)
(74) Representative: Murgitroyd & Company
(86) International application number: PCT/CN2024/119308
(87) International publication number: WO 2025/102961

(57) **Abstract**

Provided are a cathode material with a stable structure, a lithium-ion battery, and a preparation method. A general formula of the cathode material with a stable structure is LiₓNi_{y}Co_{z}MnᵣMaₚMb_{q}O₂, where 0.95≤x≤ 1.05, 0≤y≤1, 0≤z≤1, 0≤r≤1, 0.001 ≤p<0.10, and 0.001≤q<0.10. The cathode material satisfies that 2.30 Å≤d(Me-O)≤2.55 Å, where d(Me-O) denotes a bond length between a transition metal element Me and oxygen in the cathode material, and the transition metal element Me is one of Ni, Co, and Mn. A preparation method for the cathode material, as well as a lithium-ion battery, is further provided. The cathode material exhibits excellent structural stability, and has outstanding cycle performance and storage performance especially under a high-temperature cycle, effectively prolonging actual service life of the cathode material.

## Description

### TECHNICAL FIELD

The present disclosure relates to the field of lithium battery technologies, and in particular, to a cathode material with a stable structure, a lithium-ion battery, and a preparation method.

### BACKGROUND

At present, with development of lithium battery technologies, lithium-ion batteries have been widely used in numerous fields, such as hybrid electric vehicles, electric vehicles, electric motorcycles, smart grids, military equipment, and aeronautics and astronautics. The market has put forward higher requirements for various properties of the lithium-ion batteries, such as longer cycle life, higher safety and so on.

Existing lithium-ion battery materials include a ternary material, a lithium iron phosphate material, a lithium cobaltate material, a lithium manganate material, and the like, among which the ternary material has the advantages of high discharge capacity, excellent cycle performance, low cost, and the like, and thus plays an important role in the field of electric vehicles and large-scale energy storage. However, the ternary material suffers from rapid capacity decay during charge-discharge cycle at a high temperature, as well as degraded storage performance, leading to limitation to its application. Furthermore, for a high-nickel ternary material, safety problems are easily triggered by an exothermic thermal decomposition reaction of a charged cathode and subsequent thermal runaway of the battery, or by increase in internal pressure of the battery caused by gas generation reaction between an electrolyte and the cathode.

It should be noted that the information disclosed in the foregoing background is merely for enhancing the understanding of the background of the present disclosure, and therefore may include information that does not constitute prior art known to a person of ordinary skill in the art.

### SUMMARY

To solve the technical problem described above, the present disclosure provides a cathode material with a stable structure, a lithium-ion battery, and a preparation method.

According to a first aspect of the present disclosure, a cathode material with a stable structure is provided, where a general formula of the cathode material is LiₓNi_{y}Co_{z}MnᵣMaₚMb_{q}O₂, 0.95≤x≤1.05, 0≤y≤1, 0≤z≤1, 0≤r≤1, 0.001≤p<0.10, and 0.001≤q<0.10; the cathode material satisfies that 2.30 Å≤d(Me-O)≤2.55 Å, where d(Me-O) denotes a bond length between a transition metal element Me and oxygen in the cathode material, and the transition metal element Me is one of Ni, Co, and Mn.

In an exemplary embodiment of the present disclosure, the cathode material satisfies: 1.0 ≤D314≤2.0, and/or 1.5≤D321≤2.5; where D314=D003/D104, D321=D003/D210, D003 is a grain size of a (003) crystal plane, D104 is a grain size of a (104) crystal plane, and D210 is a grain size of a (210) crystal plane.

In an exemplary embodiment of the present disclosure, the cathode material satisfies: 0.15 ≤F≤0.28, and F is a microscopic stress of the cathode material.

In an exemplary embodiment of the present disclosure, in the LiₓNi_{y}Co_{z}MnᵣMaₚMb_{q}O₂, Ma is one or more selected from Sr, Ca, Mg, Na, K, and Cs, and Mb is one or more selected from Zr, Nb, W, Sb, Sn, Ti, and Mo.

In an exemplary embodiment of the present disclosure, the cathode material is a high-nickel polycrystalline ternary materia and the cathode material satisfies: 0.8≤y≤1.

According to a second aspect of the present disclosure, a preparation method for the cathode material according to any one of the foregoing is provided, including:
S1: mixing metal salts with a precipitant, a complexing agent, and a first additive, and then carrying out a first co-precipitation reaction to obtain a first precursor, where the first additive is a metal salt or oxide containing the element Ma;
S2: adding metal salts, a precipitant, and a complexing agent into the first precursor and then carrying out a second co-precipitation reaction to obtain a second precursor; and
S3: mixing the second precursor with a lithium source and a second additive and then carring out sintering to obtain a cathode material with a stable structure, where the second additive is a metal salt or oxide containing the element Mb.

In an exemplary embodiment of the present disclosure, in step S1, the first co-precipitation reaction is a precursor nucleation stage, a reaction temperature ranges from 50°C to 70°C, a pH value in a reaction system ranges from 10 to 12, an ammonia concentration in the reaction system ranges from 7 g/L to 10 g/L, and a reaction time ranges from 10 h to 30 h.

In an exemplary embodiment of the present disclosure, in step S2, the second co-precipitation reaction is a precursor growth stage, a reaction temperature ranges from 40°C to 60°C, a pH value in a reaction ranges from 10 to 12, an ammonia concentration in the reaction system ranges from 2 g/L to 8 g/L, and a reaction time ranges from 20 h to 80 h.

In an exemplary embodiment of the present disclosure, the precipitant is at least one selected from the group of sodium hydroxide, potassium hydroxide, and sodium carbonate; and/or, the complexing agent is at least one selected from the group of ammonium hydroxide, ethylenediaminetetraacetic acid disodium salt, ammonium nitrate, ammonium chloride, and ammonium sulfate.

In an exemplary embodiment of the present disclosure, in step S1, during the first co-precipitation reaction, input power of a stirrer is controlled at 0.1 KW to 1.6 KW; and/or, in step S2, during the second co-precipitation reaction, input power of a stirrer is controlled at 0.1 KW to 1.6 KW.

In an exemplary embodiment of the present disclosure, in step S3, the lithium source is one or more selected from lithium carbonate, lithium hydroxide, lithium nitrate, lithium fluoride, and lithium phosphate; and/or, the sintering is carried out at 600°C to 900°C for 5 h to 20 h.

According to a third aspect of the present disclosure, a lithium-ion battery is provided, including a cathode, an anode, and an electrolyte, where the cathode includes the cathode material with a stable structure according to one of the foregoing.

A cathode material with a stable structure, a lithium-ion battery, and a preparation method provided by an embodiment of the present disclosure have beneficial effects as follows:

The cathode material with a stable structure provided by an embodiment of the present disclosure can effectively improve thermal stability of the cathode material by adjusting a bond length between a transition metal and oxygen. When the cathode material satisfies that 2.30 Å≤ d(Me-O)≤2.55 Å, oxygen release of the cathode material is the least. Experimental results demonstrate that the cathode material exhibits a highest onset temperature of DSC (differential scanning calorimetry) exothermic peak and the lowest heat release, thereby achieving the best thermal stability. On the one hand, the high-temperature cycle performance of the cathode material can be improved, on the other hand, the safety problem caused by a high-nickel content state can be effectively reduced.

Further, after a grain orientation and a microscopic stress of the cathode material are regulated, the structural stability of the material can be greatly improved within the scope defined in embodiments of the present disclosure. A capacity retention rate of the cathode material after 100 cycles at 1C exceeds 90%.

It should be understood that the foregoing general description and the following detailed description are exemplary and explanatory merely and are not intended to limit the present disclosure.

### BRIEF DESCRIPTION OF THE DRAWINGS

To describe technical solutions in embodiments of the present disclosure more clearly, the following briefly introduces the accompanying drawings required for describing the embodiments. It should be understood that the accompanying drawings show merely some embodiments of the present disclosure, and thus should not be construed as a limitation on the scope. A person of ordinary skill in the art may still derive other accompanying drawings from these accompanying drawings without creative efforts.

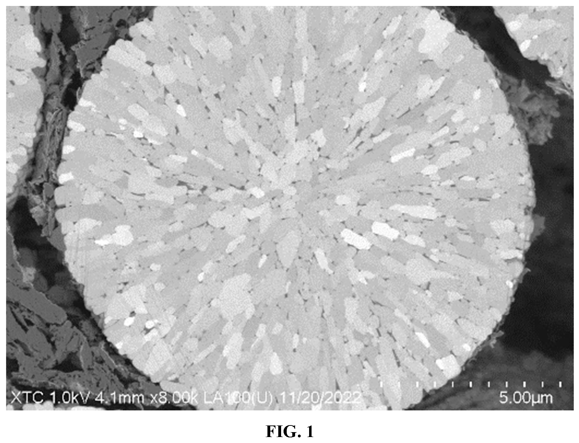

FIG. 1 is an SEM (Scanning Electron Microscopy) image of a high-nickel ternary material according to Embodiment 1 of the present disclosure.

### DETAILED DESCRIPTION OF THE EMBODIMENTS

To make the objective, technical solutions, and advantages of embodiments of the present disclosure more clearly, the technical solutions of the embodiments of the present disclosure are clearly and completely described in detail below. For specific conditions not specified in the embodiments, the conventional conditions or the conditions suggested by the manufacturer shall be followed. All reagents and instruments used without specifying the manufacturer are standard laboratory products that are commercially available.

A cathode material with a stable structure, a lithium-ion battery, and a preparation method provided by an embodiment of the present disclosure are described in detail below.

An embodiment of the present disclosure provides a cathode material with a stable structure, where a general formula of the cathode material is LiₓNi_{y}Co_{z}MnᵣMaₚMb_{q}O₂, 0.95≤x≤ 1.05, 0≤y≤1, 0≤z≤1, 0≤r≤1, 0.001≤p<0.10, and 0.001≤q<0.10. The cathode material satisfies that 2.30 Å≤d(Me-O)≤2.55 Å, where d(Me-O) denotes a bond length between a transition metal element Me and oxygen in the cathode material, and the transition metal element Me is one of Ni, Co, and Mn. Specifically, d(Me-O) may denote a Ni-O bond length d(Ni-O), a Co-O bond length d(Co-O), or a Mn-O bond length d(Mn-O).

It may be understood that in the embodiment of the present disclosure, it may be that all of d(Ni-O), d(Co-O), and d(Mn-O) fall within a range of 2.30 Å to 2.55 Å, or it may be that only one of the three falls within the range of 2.30 Å to 2.55 Å. Further, in a preferred embodiment of the present disclosure, the cathode material is a high-nickel ternary material with an R-3m space group, and values of d(Ni-O), d(Co-O), and d(Mn-O) are equal and simultaneously satisfy that 2.30 Å≤d(Me-O)≤2.55 Å. For example, (Me-O) is 2.30 Å, 2.40 Å, 2.50 Å, and the like. In this structure, the cathode material can reach the best thermal stability, which can effectively alleviate a problem of gas generation of the lithium-ion battery and improve safety of the lithium-ion battery.

Further, in one of the embodiments, the cathode material satisfies:1.0≤D314≤2.0, and/or 1.5≤D321≤2.5, where D314=D003/D104, D321=D003/D210, D003 is a grain size of a (003) crystal plane, D104 is a grain size of a (104) crystal plane, and D210 is a grain size of a (210) crystal plane. Specifically, in some embodiments, the grain orientation of the cathode material: D314 is 1.2, 1.4, 1.5 or 1.8 and D321 is 1.5, 1.6, 1.7, 2.0, 2.2 or 2.3. Further preferably, the cathode material simultaneously satisfies:1.0≤D314≤2.0, and 1.5≤D321≤2.5.

During preparation of the cathode material, sintering may cause growth of the grain size, a polycrystalline material has an apparent grain orientation, and the roundness and growth orientation of grains are determined using a grain size ratio of different crystal planes. The inventors have found through research that a favorable grain morphology and a crystal growth orientation can be obtained by adjusting the grain size ratio of the (003) crystal plane to the (104) crystal plane, the (003) crystal plane to the (210) crystal plane. The cathode material obtained within this range exhibits excellent roundness and better structural stability. When ions are intercalated and deintercalated under a high-temperature environment, particle pulverization is less likely to occur.

Further, in one of embodiments, the cathode material satisfies that 0.15≤F≤0.28, where F is a microscopic stress of the cathode material. Exemplary, the microscopic stress F is 0.16, 0.17, 0.18, 0.20 or 0.22.

The microscopic stress is used to characterize lattice defects inside the material. When the microscopic stress F of the material is maintained within the above range, the material exhibits optimal stress behavior and shows a uniform stress release space, which can further improve structural stability of the material.

When the cathode material provided by the embodiment of the present disclosure simultaneously satisfies that d(Me-O), 1.0 ≤ D314 ≤ 2.0, and 0.15 ≤ F ≤ 0.28, synergistic regulation among three aspects which are an interlayer spacing of transition metal layers, the grain growth orientation, and internal lattice defect structure makes the obtained cathode material exhibit excellent thermal stability with a significantly delayed onset temperature of the DSC exothermic peak. The cathode material also possesses superior structural stability, and demonstrates outstanding cycle performance and storage performance especially under a high-temperature cycle, thereby effectively prolonging practical service life of a ternary cathode material.

It should be noted that the cathode material can be subjected to XRD (X-Ray Diffraction) test according to testing methods in the prior art, and then analysis is performed by fitting refinement to obtain foregoing parameters: d(Me-O), grain sizes of the (003), (104) or (210) crystal planes, and the microscopic stress F. The ternary material is used as an example, testing conditions for an XRD pattern of the cathode material may be as follows: the power is 1.6 kW, a test step is 0.01°, residence time is 0.5 s, grain sizes of different crystal planes are calculated from test patterns using Rietveld refinement analysis, F denotes microscopic stress data obtained by refining XRD data of the material, and d denotes an oxygen position obtained by refinement, that is, a bond length between the transition metal and oxygen.

In an exemplary embodiment of the present disclosure, in the LiₓNi_{y}Co_{z}MnᵣMaₚMb_{q}O₂, Ma is one or more selected from Sr, Ca, Mg, Na, K, and Cs, and Mb is one or more selected from Zr, Nb, W, Sb, Sn, Ti, and Mo. The cathode material is doped with different elements Ma and Mb, so that the grain orientation of the cathode material growth, the change of an interlayer spacing of transition metal layers and lattice defects inside the material can be properly regulated and controlled.

Further, the cathode material is a high-nickel polycrystalline ternary material, where 0.8 ≤y≤1. The high-nickel polycrystalline ternary material has a higher energy density and a wide application prospect.

An embodiment of the present disclosure further provides a preparation method for the cathode material, including the following steps:

Step S1. Mixing metal salts with a precipitant, a complexing agent, and a first additive, and then carrying out a first co-precipitation reaction to obtain a first precursor, where the first additive is a metal salt containing element Ma, where Ma is one or more selected from Sr, Ca, Mg, Na, K, and Cs.

Further, in this step, metal salts are configured based on the general formula LiₓNi_{y}Co_{z}MnᵣMaₚMb_{q}O₂, that are a nickel salt, a cobalt salt, and a manganese salt. The nickel salt, the cobalt salt, the manganese salt, or the Ma-containing metal salt may be sulfate, carbonate, or nitrate, such as nickel sulfate, nickel nitrate, cobalt sulfate, or manganese sulfate.

Further, in this step, the precipitant is at least one selected from the group of sodium hydroxide, potassium hydroxide, and sodium carbonate. The complexing agent is at least one selected from the group of ammonium hydroxide, ethylenediaminetetraacetic acid disodium salt, ammonium nitrate, ammonium chloride, and ammonium sulfate.

Further, in this step, the raw materials are subjected to the first co-precipitation reaction in a reactor, where input power of a stirrer of the reactor is controlled at 0.1 KW to 1.6 KW.

Further, in this step, the first co-precipitation reaction is a precursor nucleation stage, and the obtained first precursor is a porous core containing a doping element Ma. In this step, a reaction temperature ranges from 50°C to 70°C, a pH value in a reaction system ranges from 10 to 12, an ammonia concentration in the reaction system ranges from 7 g/L to 10 g/L, and reaction time ranges from 10 h to 30 h.

Step S2. Adding metal salts, a precipitant and a complexing agent into the first precursor obtained in step S1 and then carrying out a second co-precipitation reaction to obtain a second precursor. The metal salts are a nickel salt, a cobalt salt, and a manganese salt.

Further, in this step, the precipitant is at least one selected from the group of sodium hydroxide, potassium hydroxide, and sodium carbonate. The complexing agent is at least one selected from the group of ammonium hydroxide, ethylenediaminetetraacetic acid disodium salt, ammonium nitrate, ammonium chloride, and ammonium sulfate.

Further, in this step, a reaction temperature ranges from 40°C to 60°C, a pH value in a reaction system ranges from 10 to 12, an ammonia concentration in the reaction system ranges from 2 g/L to 8 g/L, and reaction time ranges from 20 h to 80 h.

Further, in this step, the second co-precipitation reaction is carried out in a reactor, where input power of a stirrer of the reactor is controlled at 0.1 KW to 1.6 KW.

Further, in this step, the second co-precipitation reaction is a precursor growth stage, and a shell structure without a doping element is formed outside the first precursor, which has a porous core containing the doping element Ma. A structural formula of the obtained second precursor is Ni_{y}Co_{z}MnᵣM1ₚ(OH)₂, where 0≤y≤1, 0≤z≤1, 0≤r≤1, and 0.001≤p<0.10.

The inventors have found through research that primary particles inside the high-nickel polycrystalline cathode material are often small and have insufficient crystallinity, which makes internal particles become inactive materials and the capacity not be fully exerted. In the prior art, sintering is usually adopted for doping with a low-valence element. This method makes it difficult to dope elements into the interior of the particles, doping tends to occur solely on the surface, it is prone to the formation of a semiconductor inside the material or direct element segregation, making effective doping impossible. In the preparation method provided in the embodiment of the present disclosure, doping uniformity of the internal primary particles during sintering can be ensured by doping the low-valence element into a crystal seed in the precursor nucleation stage. In addition, the low-valence element has a fluxing effect, which can promote grain growth of the internal primary particles, make the crystallinity reach the requirement, and enable better lithium-ion deintercalation.

Step S3. Mixing the second precursor obtained in step S2 with a lithium source and a second additive and then carring out sintering to obtain a cathode material with a stable structure, where the second additive is a metal salt or oxide containing an element Mb, and Mb is one or more selected from Zr, Nb, W, Sb, Sn, Ti, and Mo.

Further, in this step, the lithium source is one or more selected from lithium carbonate, lithium hydroxide, lithium nitrate, lithium fluoride, and lithium phosphate.

Further, in this step, the sintering is carried out at 600°C to 900°C for 5 h to 20 h.

In this step, better growth orientation can be achieved by carrying out surface doping with a high-valence element, so that the high-nickel polycrystalline material has better dispersibility.

According to the preparation method for the cathode material provided by an embodiment of the present disclosure, a doping method for the cathode material for a lithium-ion battery is improved, including doping the low-valence element into a precursor crystal nucleus, and doping the high-valence element during sintering, thereby realizing oriented growth of the grain orientation and growth uniformity of internal and external primary particles, and achieving the purpose of stable structure.

An embodiment of the present disclosure further provides a lithium-ion battery, including a cathode, an anode, and an electrolyte, where the cathode includes the foregoing cathode material with a stable structure. The lithium-ion material may also include a separator between the cathode and the anode. It may be understood that the lithium-ion battery may be fabricated according to a known method in the prior art.

Characteristics and performance of the present disclosure are further described in detail below with reference to embodiments.

### Embodiment 1

This embodiment provides a high-nickel polycrystalline cathode material, which is prepared according to the following steps.
(1) In a precursor nucleation stage, nickel sulfate, manganese sulfate, cobalt sulfate, sodium hydroxide, ammonium hydroxide, and strontium sulfate are added into a reactor at the same time for a co-precipitation reaction, with input power of a stirrer of the reactor controlled at 1.0 KW, a reaction temperature of 60°C, a precipitation pH of 11, an ammonia concentration in a reaction system of 8.5 g/L, and reaction time of 12 h.
(2) In a precursor growth stage, nickel sulfate, manganese sulfate, cobalt sulfate, sodium hydroxide, and ammonium hydroxide are continuously added into a reactor at the same time for a co-precipitation reaction, with input power of a stirrer of the reactor controlled at 1.0 KW, a reaction temperature of 50°C, a precipitation pH of 12, an ammonia concentration in a reaction system of 6 g/L, and reaction time of 57 h, thereby obtaining a hydroxide precursor having a porous core with a doping element and a shell structure without a doping element, which has a chemical general formula of Ni_{0.90}Co_{0.06}Mn_{0.04}Sr_{0.005}(OH)₂.
(3) The hydroxide precursor obtained in step (2), lithium hydroxide, and zirconium dioxide (ZrO₂) are put into a mixer according to a preset proportion to be mixed for 15 min at a speed of 700 r/m to obtain a mixture.
(4) The mixture obtained in step (3) is put into a sintering furnace for sintering at a temperature of 750°C for 700 min, after the sintering is finished, a sintered material is cooled, pulverized, and sieved with a 200-mesh screen to obtain the high-nickel polycrystalline cathode material.

With reference to FIG. 1 which is an SEM image of a high-nickel polycrystalline cathode material obtained according to Embodiment 1. As can be learned from the figure that primary grains of the high-nickel polycrystalline cathode material are uniform, smooth, and round, and have uniform pore distribution; and the primary grains are uniformly distributed inside and outside the secondary particles.

### Embodiment 2

This embodiment provides a high-nickel polycrystalline cathode material, and a difference from Embodiment 1 is that in step (1), the strontium sulfate is replaced with calcium sulfate. In step (2), the chemical general formula of the obtained precursor is Ni_{0.90}Co_{0.06}Mn_{0.04}Ca_{0.005}(OH)₂.

### Embodiment 3

This embodiment provides a high-nickel polycrystalline cathode material, and a difference from Embodiment 1 is that in step (1), the zirconium dioxide (ZrO₂) is replaced with NbO₂.

### Comparative Example 1

This comparative example provides a high-nickel polycrystalline cathode material, which is prepared according to the following steps:
(1) In a precursor nucleation stage, nickel sulfate, manganese sulfate, cobalt sulfate, sodium hydroxide, and ammonium hydroxide are added into a reactor at the same time for a co-precipitation reaction, with input power of a stirrer of the reactor controlled at 1.0 KW, a reaction temperature of 60°C, a precipitation pH of 11, an ammonia concentration in a reaction system of 8.5 g/L, and reaction time of 12 h.
(2) In a precursor growth stage, nickel sulfate, manganese sulfate, cobalt sulfate, sodium hydroxide, and ammonium hydroxide are added into a reactor at the same time for a co-precipitation reaction, with input power of a stirrer of the reactor controlled at 1.0 KW, a reaction temperature of 50°C, a precipitation pH of 12, an ammonia concentration in a reaction system of 6 g/L, and reaction time of 57 h, thereby obtaining a hydroxide precursor, which has a chemical general formula of Ni_{0.90}Co_{0.06}Mn_{0.04}(OH)₂.
(3) The hydroxide precursor obtained in step (2), lithium hydroxide, strontium oxide, and zirconium dioxide (ZrO₂) are put into a mixer according to a preset proportion to be mixed for 15 min at a speed of 700 r/m to obtain a mixture.
(4) The mixture obtained in step (3) is put into a sintering furnace for sintering at a temperature of 750°C for 700 min, after the sintering is finished, a sintered material is cooled, pulverized, and sieved with a 200-mesh screen to obtain the high-nickel polycrystalline cathode material.

### Comparative Example 2

This comparative example provides a high-nickel polycrystalline cathode material, which is prepared according to the following steps.
(1) Nickel sulfate, manganese sulfate, cobalt sulfate, sodium hydroxide, ammonium hydroxide, and strontium sulfate are added into a reactor at the same time for a co-precipitation reaction, with input power of a stirrer of the reactor controlled at 1.0 KW, a reaction temperature of 55°C, a precipitation pH of 11.5, an ammonia concentration in a reaction system of 7 g/L, and reaction time of 64 h, thereby obtaining a hydroxide precursor, which has a chemical general formula of Ni_{0.90}Co_{0.06}Mn_{0.04}Sr_{0.005}(OH)₂.
(2) The hydroxide precursor obtained in step (1) and lithium hydroxide are put into a mixer according to a preset proportion to be mixed for 15 min at a speed of 700 r/m to obtain a mixture.
(3) The mixture obtained in step (2) is put into a sintering furnace for sintering at a temperature of 750°C for 700 min, after the sintering is finished, a sintered material is cooled, pulverized, and sieved with a 200-mesh screen to obtain the high-nickel polycrystalline cathode material.

### Experimental example

Coin cells are fabricated using the high-nickel polycrystalline cathode materials obtained in Embodiments 1 to 3 and Comparative Examples 1 and 2, and then subjected to high-temperature cycle performance tests. Specific steps are as follows:

Fabrication of each of the coin cells is as follows: A. The high-nickel polycrystalline cathode material, carbon black, and polyvinylidene fluoride are dispersed into N-methyl pyrrolidone (NMP) in a mass ratio of 90:6:4 to obtain a slurry. The slurry is coated onto aluminum foil, dried in an oven at 120 °C, and then punched to obtain a cathode sheet. B. Electrolyte: LiPF₆with a concentration of 1 mol/L is added to a mixture of ethylene carbonate (EC), ethyl methyl carbonate (EMC), and dimethyl carbonate (DMC) prepared at a mass ratio of 1:1:1. C. anode: lithium metal sheet. D. The foregoing components are assembled into the coin cell, and the coin cell is allowed to stand for one day before the high-temperature cycling performance test.

The high-temperature cycle performance test method is as follows: the assembled and rested coin cell is placed in a thermostat at 45°C for 100 cycles of charge and discharge, where a voltage range during the test ranges from 3.0 V to 4.3 V, and a test rate is 1C (1C = 200 mAh/g).

Test results are as shown in Table 1.

**Table 1**

| Item | General formula | d(M e-O), Å | D31 4 | D32 1 | Stres s F | Onset temperat ure of DSC exother mic peak | Cycle performa nce |
|---|---|---|---|---|---|---|---|
| Embodim ent 1 | Li_{1.02}Ni_{0.90}Co_{0.06}Mn_{0.04}Sr_{0.005} Zr_{0.01}O₂ | 2.42 0 | 1.47 50 | 1.63 53 | 0.17 88 | 183.6°C | 97.5% |
| Embodim ent 2 | Li_{1.02}Ni₀.₉₀Co₀.₀₆Mn_{0.04}Ca_{0.00 5}Zr_{0.01}O₂ | 2.36 2 | 1.56 83 | 1.92 16 | 0.18 45 | 180.9°C | 97.8% |
| Embodim ent 3 | Li_{1.02}Ni_{0.90}Co_{0.06}Mn_{0.04}Sr_{0.005} Nb_{0.01}O₂ | 2.39 9 | 1.85 41 | 2.04 23 | 0.22 15 | 178.3°C | 96.2% |
| Comparat ive Example 1 | Li_{1.02}Ni_{0.90}Co_{0.06}Mn_{0.04} Sr_{0.005}Zr_{0.01}O₂ | 1.84 2 | 1.73 05 | 1.24 73 | 0.25 46 | 171.3 °C | 92.5% |
| Comparat ive Example 2 | Li_{1.02}Ni_{0.90}Co_{0.06}Mn_{0.04}Sr_{0.005} O₂ | 2.01 5 | 1.67 25 | 1.60 21 | 0.20 11 | 169.8°C | 89.9% |

As can be learned from Table 1 that the high-nickel polycrystalline cathode material provided by each of the embodiment of the present disclosure has higher onset temperature of DSC exothermic peak, better thermal stability, and excellent high-temperature cycle performance when each of d(Me-O), D314, D321 and the stress F satisfies a certain range, so that the service life of the lithium-ion battery can be effectively prolonged, and the safety is improved.

The embodiments described above are not exhaustive. Detailed description of the embodiments of the present disclosure is not intended to limit the scope of the present disclosure as claimed, but merely represents selected embodiments of the present disclosure. All other embodiments obtained by a person of ordinary skill in the art based on the embodiments of the present disclosure without creative efforts shall fall within the scope of protection of the present disclosure.

## Claims

1. A cathode material with a stable structure, wherein a general formula of the cathode material is LiₓNi_{y}Co_{z}MnᵣMaₚMb_{q}O₂, 0.95≤x≤1.05, 0≤y≤1, 0≤z≤1, 0≤r≤1, 0.001≤p<0.10, and 0.001≤q<0.10; the cathode material satisfies that 2.30 Å≤d(Me-O)≤2.55 Å, wherein d(Me-O) denotes a bond length between a transition metal element Me and oxygen in the cathode material, and the transition metal element Me is one of Ni, Co, and Mn.

2. The cathode material with a stable structure according to claim 1, wherein the cathode material satisfies that 1.0 ≤ D314 ≤ 2.0, and/or 1.5 ≤ D321 ≤ 2.5, D314=D003/D104, D321=D003/D210, D003 is a grain size of a (003) crystal plane, D104 is a grain size of a (104) crystal plane, and D210 is a grain size of a (210) crystal plane.

3. The cathode material with a stable structure according to claim 1, wherein the cathode material satisfies that: 0.15≤F≤0.28, and F is a microscopic stress of the cathode material.

4. The cathode material with a stable structure according to any one of claims 1 to 3, wherein in the LiₓNi_{y}Co_{z}MnᵣMaₚMb_{q}O₂, Ma is one or more selected from Sr, Ca, Mg, Na, K, and Cs, and Mb is one or more selected from Zr, Nb, W, Sb, Sn, Ti, and Mo.

5. The cathode material with a stable structure according to any one of claims 1 to 3, wherein the cathode material is a high-nickel polycrystalline ternary material which satisfies that 0.8≤y≤ 1.

6. A preparation method for the cathode material according to any one of claims 1 to 5, comprising:
S1: mixing metal salts with a precipitant, a complexing agent, and a first additive and then carrying out a first co-precipitation reaction to obtain a first precursor, wherein the first additive is a metal salt or oxide containing element Ma;
S2: adding metal salts, a precipitant, and a complexing agent into the first precursor and then carrying out a second co-precipitation reaction to obtain a second precursor; and
S3: mixing the second precursor with a lithium source and a second additive and then carrying out sintering to obtain a cathode material with a stable structure, wherein the second additive is a metal salt or oxide containing element Mb.

7. The preparation method for the cathode material according to claim 6, wherein in step S1, the first co-precipitation reaction is a precursor nucleation stage, a reaction temperature ranges from 50°Cto 70°C, a pH value in a reaction system ranges from 10 to 12, an ammonia concentration in the reaction system ranges from 7 g/L to 10 g/L, and the reaction time ranges from 10 h to 30 h.

8. The preparation method for the cathode material according to claim 6, wherein in step S2, the second co-precipitation reaction is a precursor growth stage, a reaction temperature ranges from 40°Cto 60°C, a pH value in a reaction system ranges from 10 to 12, an ammonia concentration in the reaction system ranges from 2 g/L to 8 g/L, and the reaction time ranges from 20 h to 80 h.

9. The preparation method for the cathode material according to claim 6, wherein in step S1, during the first co-precipitation reaction, input power of a stirrer is controlled at 0.1 KW to 1.6 KW; and/or, in step S2, during the second co-precipitation reaction, input power of a stirrer is controlled at 0.1 KW to 1.6 KW.

10. The preparation method for the cathode material according to claim 6, wherein the precipitant is at least one selected from the group of sodium hydroxide, potassium hydroxide, and sodium carbonate; and/or, the complexing agent is at least one selected from the group of ammonium hydroxide, ethylenediaminetetraacetic acid disodium salt, ammonium nitrate, ammonium chloride, and ammonium sulfate.

11. The preparation method for the cathode material according to claim 6, wherein in step S3, the lithium source is one or more selected from lithium carbonate, lithium hydroxide, lithium nitrate, lithium fluoride, and lithium phosphate; and/or, the sintering is carried out at a temperature of 600°C to 900°C for 5 h to 20 h.

12. A lithium-ion battery, comprising a cathode, an anode, and an electrolyte, wherein the cathode comprises the cathode material with a stable structure according to any one of claims 1 to 5.
